# EUROPÄISCHE PATENTANMELDUNG

(11) **EP 2 713 494 A1**
(43) Veröffentlichungstag der Anmeldung: **02.04.2014**
(21) Anmeldenummer: 12186544.8
(22) Anmeldetag: 28.09.2012
(51) Int. Cl.: H02M 5/458

(54) **Energieeinspeisevorrichtung zur Einspeisung von aus kinetischer Energie erzeugter elektrischer Energie in ein Drehstromverteilernetz**

(71) Anmelder: Siemens Aktiengesellschaft, 80333 München (DE)
(72) Erfinder: Göpfrich, Kurt, 91058 Erlangen (DE)

(57) **Zusammenfassung**

Die Erfindung betrifft eine Energieeinspeisevorrichtung (1) zur effizienten und elektromagnetisch verträglichen Einspeisung einer aus kinetischer Energie mittels eines Drehstromgenerators (16) erzeugten elektrischen Energie in ein Drehstromverteilernetz (3). Die vorgeschlagene Energieeinspeisevorrichtung (1) besteht aus einem Drehstrom-Filter (9), der ausgehend von dessen Verteilernetz-Drehstromphasen (U_{V},V_{V},W_{V}) über eweils eine Kapazität (C₁,C₂,C₃) einen Drehstromverteilernetz-Sternpunkt (12) bildet, welcher mit einer weiteren Kapazität (C₄) zur Anbindung an ein Erdpotential (PE₁) vorgesehen ist, einem Wechselrichter (4), der zur Umrichtung einer mittels einer Kapazität (C₅) vorgeladenen Zwischenkreis-Gleichspannung (UDC₂) in entsprechende Verteilernetz-Wechselspannungen (UAC_{V1},UAC_{V2},UAC_{V3}) vorgesehen ist, einem Gleichspannungs-Wandler (7), der zur Wandlung einer Gleichspannung (UDC₁) an einem Gleichstromkreis (17) in die Zwischenkreis-Gleichspannung (UDC₂) vorgesehen ist, einem Gleichstrom-Filter (10), der mittels zweier zwischen den Gleichstromphasen (DC+,DC-) angeordneter Kapazitäten (C₆,C₇) einen Abgriff für einen Gleichstromkreis-Sternpunkt (28) bildet, welcher über eine weitere Kapazität (C₈) zur Verbindung mit einem Erdpotential (PE₂) vorgesehen ist, einem Gleichrichter (11), der zur Umrichtung einer Erzeugernetz-Wechselspannung (UA-C_{E1},UAC_{E2},UAC_{E3}) in die Gleichspannung (UDC₁) vorgesehen ist und einer Sternpunktkopplung (30) zwischen dem Gleichstromkreis-Sternpunkt (28) und dem Drehstromverteilernetz-Sternpunkt (12), die zur symmetrischen Anbindung des Gleichstromkreises (17) an den Drehstromverteilernetz-Sternpunkt (12) vorgesehen ist.

## Beschreibung

Die Erfindung betrifft eine Energieeinspeisevorrichtung zur effizienten und elektromagnetisch verträglichen Einspeisung einer aus kinetischer Energie mittels eines Drehstromgenerators erzeugten elektrischen Energie in ein Drehstromverteilernetz.

Eine solche Energieeinspeisevorrichtung kommt zum Einsatz, wenn insbesondere aus regenerativen Energiequellen, wie beispielsweise Windenergie, kinetische Energie mittels Turbinen gewonnen wird, welche im Anschluss von elektrischen Generatoren, meist Drehstromgeneratoren, in elektrische Energie gewandelt und in ein elektrisches Energienetz eingespeist wird. Um die auf diese Art gewonnene elektrische Energie den Verbrauchern großflächig und in ausreichendem Maße zur Verfügung zu stellen, werden die Turbinen, Generatoren und Energieeinspeisevorrichtungen oft so ausgelegt, dass sie u.a. dezentral in ein Drehstromverteilernetz einspeisen können. Die Einspeisung der erzeugten elektrischen Energie ist mit technischen Rahmenbedingungen verbunden, welche an die Einspeisevorrichtung in Kombination mit Turbine und Drehstromgenerator eine Vielzahl von Anforderungen stellen und oft vom Betreiber des Drehstromverteilernetzes zwingend vorgeschrieben werden. Eine effiziente und aus elektrischer Sicht qualitativ hochwertige Wandlung der elektrischen Energie ist an dieser Stelle eine Grundvoraussetzung für deren Einspeisung in das Drehstromverteilernetz. Die Energienetzbetreiber geben für einen stabilen Betrieb der elektrischen Energieversorgung technische Kenngrößen vor, wie beispielsweise Höhe der Spannung, Qualität der Sinusfunktion von Strom und Spannung, Phasenverschiebungswinkel und Netzfrequenz, welche für die Energieeinspeisung einzuhalten sind. Somit muss die Energieeinspeisevorrichtung in der Lage sein, die vom Drehstromgenerator bereitgestellte elektrische Energie, welche sich u.a. in Frequenz und Spannung vom Drehstromverteilernetz unterscheiden kann, in das Drehstromnetz zu überführen. Die Turbine und der von ihr angetriebene Drehstromgenerator müssen in Kombination mit der Energieeinspeisevorrichtung aufeinander abgestimmt werden, so dass ein optimaler Betriebspunkt für die Energieeinspeisung gewährleistet ist. Wirtschaftliche und technische Erwägungen legen nahe, bewährte Komponenten der Erzeugung, Umrichtung und Einspeisung von elektrischer Energie auch für den Bereich der kinetischen, respektive der elektrischen Energiegewinnung aus regenerativen Energiequellen, insbesondere der Windenergie einzusetzen und an das damit verbundene Umfeld anzupassen.

Eine wesentliche Komponente der in diesem Kontext benötigten Energieeinspeisevorrichtung ist der netzseitige Wechselrichter, welcher auch als Active Front End (AFE) bezeichnet wird. Er besitzt vorteilhafte Eigenschaften bezüglich der Erfüllung einiger der genannten Anforderungen zur Einspeisung von elektrischer Energie in ein Drehstromverteilernetz, wobei die elektrische Energie mittels Drehstromgeneratoren aus der beispielsweise von Windturbinen bereitgestellten kinetischen Energie gewonnen wird. So können auf Seiten des Drehstromverteilernetzes sinusförmige Ströme eingeprägt werden, was die Netzqualität erhöht. Weiterhin ist der Phasenverschiebungswinkel variabel einstellbar und die Zwischenkreis-Gleichspannung des Wechselrichters kann in Kombination mit einem Gleichspannungs-Wandler, welcher auch als Hochsetzsteller bezeichnet wird, geregelt werden.

Aus DE 10 2006 016 502 A1 ist eine Energieeinspeisevorrichtung bekannt, welche insbesondere die Einspeisung von aus Solarenergie gewonnener elektrischer Energie ermöglicht. Sie besteht im Wesentlichen aus einem Hochsetzsteller, einem gesteuerten Stromrichter und einem Filter am Drehstromverteilernetz. Für die Einspeisung elektrischer Energie, welche in Form eines Wechselstromes von einem Drehstromgenerator bereitgestellt wird, ist die in der DE 10 2006 016 502 A1 genannte Energieeinspeisevorrichtung aber aus Sicht der Umrichtertopologie nicht ausreichend.

Auch wenn für die aufgezeigte Energieeinspeisevorrichtung nach der DE 10 2006 016 502 A1 ein Gleichrichter zur Gleichrichtung der vom Drehstromgenerator in einem Drehstromerzeugernetz erzeugten Wechselspannung eingesetzt wird, treten Nachteile beim Einsatz von Energieeinspeisetopologien dieser Art auf. Die von der Turbine am Generator bereitgestellte kinetische Energie ist nicht immer kontinuierlich und in einem für die Energieeinspeisevorrichtung ausreichenden bzw. unkritischen Maße verfügbar. Neben dem nun vorgeschalteten Gleichrichter werden auch Überlastkomponenten eingesetzt und es erfolgt eine Anpassung der für die Ansteuerung der aktiven Leistungshalbleiter des Wechselrichters benutzten Kennlinien. Die auf diese Art kombinierte Energieeinspeisevorrichtung ist technisch aufwändig und bezüglich der elektrischen Performance wenig effizient. Ein weiterer Nachteil ergibt sich für die bisherigen Lösungen, wenn die Zwischenkreis-Gleichspannung am Wechselrichter gegenüber dem Erdpotential des Drehstromverteilernetzes stark springt. Das belastet die elektronischen Bauteile im Wechselrichter bzw. erfordert eine höhere Auslegung dieser Bauteile.

Generell werden innovative Topologien für Energieeinspeisevorrichtungen mit dem Fokus der Einspeisung von Energie aus regenerativen Energiequellen, wie beispielsweise der Windenergie, benötigt. Im Gegensatz zu Solarsystemen, welche ihre elektrische Energie in Form einer Gleichstrom-Quelle zur Verfügung stellen, ist eine Transformation der kinetischen Energie der Turbinen in elektrische Energie notwendig. Die elektrische Energie kann aber nicht direkt in das Drehstromverteilernetz eingespeist werden. Für die Wandlung der kinetischen Energie in elektrische Energie haben sich Drehstromgeneratoren als technisch zuverlässig bewährt und werden vielfach eingesetzt. Aus dieser Art der Bereitstellung von elektrischer Energie ergeben sich die eingangs erwähnten spezifische Anforderungen an die Energieeinspeisung in Drehstromverteilernetze, die erfüllt werden müssen. Ein weiterer wichtiger Aspekt für diese Art von Energieeinspeisevorrichtungen ist die Sicherstellung der elektromagnetischen Verträglichkeit nicht nur im großindustriellen Umfeld sondern beispielsweise auch für Anwendungen in mittleren und kleinen Offshore- und Onshore-Windanlagen. Dies soll allerdings mit einem wirtschaftlich vertretbaren Aufwand beim Einsatz von Material und Installationsleistungen bzgl. abschirmungstechnischer Maßnahmen zur elektromagnetischen Verträglichkeit geschehen.

Der Erfindung liegt die Aufgabe zugrunde, eine Energieeinspeisevorrichtung der eingangs genannten Art anzugeben, deren Topologie und damit verbundene Wirkungsweise es ermöglicht, elektrische Energie, welche durch die Wandlung von kinetischer Energie einer Turbine mittels eines Drehstromgenerators erzeugt wird, effizient und elektromagnetisch verträglich in ein Drehstromverteilernetz einzuspeisen.

Diese Aufgabe wird durch eine Energieeinspeisevorrichtung zur effizienten und elektromagnetisch verträglichen Einspeisung einer aus kinetischer Energie mittels eines Drehstromgenerators erzeugten elektrischen Energie in ein Drehstromverteilernetz, aufweisend einen Drehstrom-Filter im Drehstromverteilernetz, der ausgehend von dessen Verteilernetz-Drehstromphasen über jeweils eine Kapazität einen Drehstromverteilernetz-Sternpunkt bildet, welcher mit einer weiteren Kapazität zur Anbindung an ein Erdpotential vorgesehen ist, einen Wechselrichter, der zur Umrichtung einer mittels einer Kapazität vorgeladenen Zwischenkreis-Gleichspannung eines Gleichspannungs-Zwischenkreises in entsprechende Verteilernetz-Wechselspannungen des Drehstromverteilernetzes vorgesehen ist, einen Gleichspannungs-Wandler, der zur Wandlung einer Gleichspannung an einem Gleichstromkreis in die Zwischenkreis-Gleichspannung des Gleichspannungs-Zwischenkreises vorgesehen ist, einen Gleichstrom-Filter im Gleichstromkreis, der mittels zweier zwischen den Gleichstromphasen angeordneter Kapazitäten einen Abgriff für einen Gleichstromkreis-Sternpunkt bildet, welcher über eine weitere Kapazität zur Verbindung mit einem Erdpotential vorgesehen ist, einen Gleichrichter, der zur Umrichtung einer Erzeugernetz-Wechselspannung eines Drehstromerzeugernetzes in die Gleichspannung des Gleichstromkreises vorgesehen ist und eine Sternpunktkopplung zwischen dem Gleichstromkreis-Sternpunkt und dem Drehstromverteilernetz-Sternpunkt, die zur symmetrischen Anbindung des Gleichstromkreises an den Drehstromverteilernetz-Sternpunkt des Drehstromverteilernetzes vorgesehen ist, gelöst.

Der Erfindung liegt die Erkenntnis zu Grunde, dass eine Energieeinspeisevorrichtung alle Anforderungen der Einspeisung einer von aus einer kinetischen Energie mittels eines Drehstromgenerators erzeugten elektrischen Energie in ein Drehstromverteilernetz effizient, sicher und mit wirtschaftlich vertretbarem Aufwand erfüllen muss. Energieeinspeisevorrichtungen, welche elektrische Energie einspeisen, die beispielsweise mittels Windturbinen in Kombination mit einem Drehstromgenerator aus kinetischer Energie erzeugt und gewandelt wird, werden oft dezentral und fern großindustrieller Anlagen installiert und betrieben. Einsatzgebiete sind dann u.a. kommerziell wie auch nicht kommerziell genutzte Offshore- und Onshore-Anlagen. Dafür werden neue Energieeinspeisevorrichtungen benötigt, deren Einzelkomponenten wie Wechselrichter, Filter, Gleichspannungs-Wandler, Gleichrichter etc. für derartige Einsatzgebiete angepasst bzw. neu entwickelt werden. Mittels einer derartigen anwendungsorientierten Topologie ist es möglich, kompakte, modular aufgebaute und einfach zu betreibenden/ zu wartende Energieeinspeisevorrichtungen als Gesamtsysteme bereitzustellen. Ziel ist es, möglichst alle Vorteile der Einzelkomponenten in die Energieeinspeisevorrichtung einzubringen, auftretende Nachteile zu beseitigen und weitere spezifische Anforderungen, wie beispielsweise die elektromagnetische Verträglichkeit, zu berücksichtigen. Als ein Nachteil bekannter Energieeinspeisevorrichtungen, welche die genannten Einzelkomponenten teilweise oder vollständig einsetzen, gilt das Springen der Zwischenkreis-Gleichspannung am Gleichspannungs-Zwischenkreis gegenüber dem Erdpotential. Ein weiterer Nachteil für die bekannten Energieeinspeisevorrichtungen ist die Tatsache, dass regenerative Energiequellen, wie beispielsweise Windenergie, aufgrund sich permanent ändernder Wetter- bzw. Umweltbedingungen nicht konstant Energie bezüglich Menge und Dauer liefen können. Das hat Auswirkungen auf die elektrischen Kenngrößen wie beispielsweise verfügbare Spannung, Frequenz und Stromstärke, deren notwendige Stabilität für die Energieeinspeisung von den bekannten Energieeinspeisevorrichtungen bisher nur sehr aufwendig auszugleichen war. Mittels der erfindungsgemäßen Energieeinspeisevorrichtung werden die beschriebenen Nachteile beseitigt.

Ein Drehstromgenerator, welcher beispielsweise von einer eher niedertourig rotierenden Windturbine angetrieben wird, erzeugt oft eine vergleichsweise niederfrequente Erzeugernetz-Wechselspannung. Die Frequenz liegt hier meist unter 100 Hz. Ein Gleichrichter, als eine Komponente der Energieeinspeisevorrichtung, hat die Aufgabe, die an den Erzeugernetz-Drehstromphasen des Drehstromerzeugernetzes anliegende und von dem Drehstromgenerator erzeugte dreiphasige Erzeugernetz-Wechselspannung in eine Gleichspannung für einen Gleichstromkreis zu wandeln. Der Gleichrichter kann dafür sowohl als gesteuerter wie auch als ungesteuerter Gleichrichter ausgelegt werden. Während für einen ungesteuerten Gleichrichter in der Regel passive Leistungshalbleiter zum Einsatz kommen, werden für einen gesteuerten Gleichrichter aktive Leistungshalbleiter benötigt, welche von einem Spannungsregler getaktet angesteuert werden. Da bei den beispielsweise mittels Windturbinen angetriebenen Drehstromgeneratoren mit einer eher geringen Erzeugerfrequenz zu rechnen ist, kann der Einsatz von fremdgeführten, ungesteuerten Gleichrichtern auch aus ökonomischer Sicht vorteilhaft sein. Um einem Wechselrichter der Energieeinspeisevorrichtung eine ausreichende Zwischenkreis-Gleichspannung zur Verfügung zu stellen, übernimmt ein Gleichspannungs-Wandler, der zwischen Gleichrichter und Wechselrichter eingefügt wird, die dafür notwendige Regelung. Der Gleichspannungs-Wandler verfügt über einen Stromregler, welcher getaktet einen aktiven Leistungshalbleiter schaltet, der zwischen den beiden Gleichstromphasen kurzzeitig eine Verbindung herstellt. Der daraus resultierende, zeitlich begrenzt anstehende Kurzschluss zwischen den beiden Gleichstromphasen treibt einen Strom durch die jeweiligen Induktivitäten der Gleichstromphasen im Gleichspannungs-Wandler. Nach jeder Abschaltung des aktiven Leistungshalbleiters erhöht sich das Potential der Zwischenkreis-Gleichspannung gegenüber der Gleichspannung am Gleichstromkreis. In dieser Betriebsart kann der Gleichspannungs-Wandler auch als sogenannter Hochsetzsteller bezeichnet werden. Am Wechselrichter liegt nun eine mittels einer Zwischenkreis-Kapazität vorgeladene Zwischenkreis-Gleichspannung an. Eine Wechselrichter-Regelung erzeugt aus der Zwischenkreis-Gleichspannung durch getaktete Ansteuerung von aktiven Leistungshalbleitern eine dreiphasige Wechselspannung für das netzseitig am Wechselrichter anliegende Drehstromverteilernetz. Der Wechselrichter führt einen von der Wechselrichter-Reglung geregelten Wechselstrom durch die jeweiligen Induktivitäten seiner Verteilernetz-Drehstromphasen. Das Potential der Zwischenkreis-Gleichspannung wird auf das Potential der Wechselspannung des Drehstromverteilernetzes heruntergesetzt. Damit arbeitet der Wechselrichter als sogenannter Tiefsetzsteller. Die im Wechselrichter wie auch im Gleichspannungs-Wandler eingesetzten aktiven Leistungshalbleiter sind mit jeweils einem antiparallel verschalteten, passiven Leistungshalbleiter, insbesondere einer Diode verbunden. Diese Kombination von aktivem und passivem Leistungshalbleiter ist oft auch als ein Modul verfügbar. Für die im Wechselrichter und im Gleichspannungs-Wandler der Energieeinspeisevorrichtung betrachteten aktiven Leistungshalbleiter kommt diese Kombination zum Einsatz. Aufgrund der Anforderungen der Netzbetreiber an eine hohe elektrische Qualität der eingespeisten Energie in ihr Netz und den damit verbundenen Auflagen an die elektromagnetische Verträglichkeit muss die Energieeinspeisevorrichtung ihre Netzseite von den störenden elektromagnetischen Einflüssen der geschalteten aktiven Leistungshalbleiter des Wechselrichters isolieren. Dies wird durch die Einbringung eines Drehstrom-Filters zwischen dem Wechselrichter und dem Drehstromverteilernetz erreicht. Dabei ist der Drehstrom-Filter möglichst nahe am Wechselrichter anzuordnen. Die im Drehstrom-Filter enthaltenen Kapazitäten, welche einerseits mit jeweils einer Verteilernetz-Drehstromphase des Drehstromverteilernetzes verbunden und anderseits an einem Drehstromverteilernetz-Sternpunkt über eine weitere Kapazität mit dem Erdpotential verbunden sind, filtern unerwünschte Oberwellen bzw. Spitzen der Wechselspannung am Drehstromverteilernetz heraus. Der Einsatz des Drehstrom-Filters ermöglicht somit ein sehr hochfrequentes Schalten der aktiven Leistungshalbleiter des Wechselrichters. Um die Energieeinspeisevorrichtung vollständig elektromagnetisch verträglich zu gestalten, ist auch der aktive Leistungshalbleiter des Gleichspannungs-Wandlers in Richtung des Gleichstromkreises am Gleichrichter elektromagnetisch isoliert. Ein Gleichstrom-Filter wird dafür zwischen den Gleichrichter und möglichst nahe an den Gleichspannungs-Wandler in den Gleichstromkreis eingefügt. Er besteht aus zwei Kapazitäten, die einerseits mit den Gleichstromphasen des Gleichstromkreises und andererseits an einem Gleichstromkreis-Sternpunkt über eine weitere Kapazität mit dem Erdpotential verbunden sind. Durch diese Maßnahme wird der Gleichspannungs-Wandler in Richtung des Gleichstromkreises und weiterhin des Drehstromerzeugernetzes elektromagnetisch isoliert und das hochfrequente Schalten seines aktiven Leistungshalbleiters ermöglicht. Aufgrund der elektromagnetisch isolierenden Wirkung, welche die Energieeinspeisevorrichtung durch den Drehstrom-Filter zum Drehstromverteilernetz und den Gleichstrom-Filter zum Gleichstromkreis bzw. im Weiteren zum Drehstromerzeugernetz ermöglicht, ist ein weiterer Vorteil der Verzicht auf geschirmte Leitungen, insbesondere geschirmte Leitungen für den Leistungsteil. Ein weiterer wesentlicher Vorteil der erfindungsgemäßen Energieeinspeisevorrichtung wird durch eine Sternpunktkopplung des Drehstromverteilernetz-Sternpunkts im Drehstrom-Filter mit dem Gleichstromkreis-Sternpunkt im Gleichstrom-Filter erreicht. Ziel ist es, ein Springen der Zwischenkreis-Gleichspannung gegenüber dem Erdpotential zu verhindern. Aufgrund der Sternpunktkopplung wird somit die Gleichspannung am Gleichstromkreis symmetrisch an den mit dem Erdpotential verbundenen Drehstromverteilernetz-Sternpunkt angebunden. Diese Symmetrierung der Gleichspannung im Gleichstromkreis setzt sich als Symmetrierung der Zwischenkreis-Gleichspannung fort. Sie wird mittels der in der Wechselrichter-Regelung des Wechselrichters implementierten Phasenstromregelung erreicht, indem über die Sternpunktkopplung ein ausgleichender Strom zwischen Drehstromverteilernetz-Sternpunkt im Drehstrom-Filter und Gleichstromkreis-Sternpunkt im Gleichstrom-Filter fließt.

Vorteilhafte Ausgestaltungen der Erfindung sind in den abhängigen Ansprüchen gegeben.

Bei einer vorteilhaften Ausgestaltungsform der Energieeinspeisevorrichtung ist diese dazu vorgesehen, mit einem als Drehstromgenerator eingesetzten permanenterregten Blockstrom-Synchronmotors verbunden zu werden, welcher von einer Turbine, insbesondere von einer Windturbine erzeugte kinetische Energie in elektrische Energie wandelt. Ein Vorteil dieser Kombination aus Energieerzeugung und Energieeinspeisung ist der Einsatz von wirtschaftlich und technisch bewährten Motoren, welche generatorisch betrieben werden. Es bedarf somit keines Einsatzes von speziell gefertigten Drehstromgeneratoren. Der permanenterregte Blockstrom-Synchronmotor reduziert aufgrund seiner blockförmigen Stromhalbwellen im Gegensatz zum permanenterregten Sinusstrom-Synchronmotors wesentlich die in den Erzeugernetz-Drehstromphasen auftretenden Stromspitzen. Damit können beispielsweise die elektrischen Anforderungen an die Kapazitäten im Gleichstromkreis der Energieeinspeisevorrichtung wesentlich reduziert und somit ökonomischer dimensioniert werden. Dies kann auch weitere elektrische Komponenten der Energieeinspeisevorrichtung betreffen.

Bei einer vorteilhaften Ausgestaltungsform der Energieeinspeisevorrichtung ist im Wechselrichter am Gleichspannungs-Zwischenkreises eine Vorladeerweiterung vorgesehen, die eine Parallelschaltung aus einem Vorladewiderstand und einem insbesondere von der Wechselrichter-Regelung des Wechselrichters ansteuerbaren Überbrückungsrelais-Schaltkontakt aufweist und in Reihe mit der Kapazität zwischen den beiden Gleichstromphasen des Gleichspannungs-Zwischenkreises im Wechselrichter liegt. Die Vorladeerweiterung ermöglicht eine Begrenzung des Stromes im Gleichspannungs-Zwischenkreis sowohl beim Zuschalten des Drehstromerzeugernetzes als auch beim Zuschalten des Drehstromverteilernetzes mittels des Vorladewiderstand. Nach einem definierten Vorladungszustand der Kapazität im Gleichspannungs-Zwischenkreis, der keinen überhöhten Stromfluss mehr zulässt, wird mittels des Überbrückungsrelais-Schaltkontakts der Vorladewiderstand überbrückt.

Bei einer weiteren vorteilhaften Ausgestaltungsform der Energieeinspeisevorrichtung sind in den Verteilernetz-Drehstromphasen des Wechselrichters integrierte Strommesspunkte zur Messung der entsprechenden Wechselströme für die Wechselrichter-Regelung vorgesehen, was keine externe Beschaltung von Stromessungen am Drehstromverteilernetz notwendig macht. Bezüglich der Leitungen zwischen den Strommesspunkten und der Wechselrichter-Regelung kann vorteilhaft auf geschirmte Leitungen verzichtet werden, da die Anbringung der Drehstrom-Filter nahe am Wechselrichter vorgesehen und damit die elektromagnetische Verträglichkeit sichergestellt ist.

Bei einer weiteren vorteilhaften Ausgestaltungsform der Energieeinspeisevorrichtung sind im Wechselrichter für die aktiven Leistungshalbleiter SiC-JFETs (Silicium Carbide - Junction Gate Field Effect Transistor) und/oder SiC-MOSFETs (Silicium Carbide - Metal Oxide Semiconductor Field Effect Transistor) als hochfrequent schaltbare, aktive Leistungshalbleiter vorgesehen, die von der Wechselrichter-Regelung angesteuert werden. Diese vorteilhaften Arten von sehr leistungsfähigen aktiven Leistungshalbleiter können aufgrund der elektromagnetischen Isolierung der Energieeinspeisevorrichtung gegenüber dem Drehstromverteilernetz durch die nahe Ankopplung des Drehstrom-Filters an den Wechselrichter zum Einsatz kommen, ohne störende elektrische Einflüsse an das Drehstromverteilernetz bzw. die Umgebung abzugeben.

Bei einer weiteren vorteilhaften Ausgestaltungsform der Energieeinspeisevorrichtung sind in den Gleichstromphasen des Gleichspannungs-Wandlers Strommesspunkte zur Messung der entsprechenden Gleichströme für die Stromregelung vorgesehen, was keine externe Beschaltung von Stromessungen am Gleichstromkreis notwendig macht. Bzgl. der Leitungen zwischen den Strommesspunkten und der Stromregelung kann vorteilhaft auf geschirmte Leitungen verzichtet werden, da die Anbringung des Gleichstrom-Filters nahe am Wechselrichter vorgesehen und damit die elektromagnetische Verträglichkeit sichergestellt ist.

Bei einer weiteren vorteilhaften Ausgestaltungsform der Energieeinspeisevorrichtung ist für die Stromregelung des Gleichspannungs-Wandlers ein Hysterese-Stromregler vorgesehen. Dieser Hysterese-Stromregler vermeidet Stromspitzen insbesondere in den passiven Leistungshalbleitern der Gleichstromphasen des Gleichspannungs-Wandler durch die spezifische Art der Ansteuerung des aktiven Leistungshalbleiters des Gleichspannungs-Wandlers.

Bei einer weiteren vorteilhaften Ausgestaltungsform der Energieeinspeisevorrichtung ist im Gleichspannungs-Wandler für den aktiven Leistungshalbleiter ein SiC-JFETs oder ein SiC-MOSFETs als hochfrequent schaltbarer, aktiver Leistungshalbleiter vorgesehen, der von der Stromregelung angesteuert wird. Diese vorteilhaften Arten von sehr leistungsfähigen aktiven Leistungshalbleiter können aufgrund der elektromagnetischen Isolierung der Energieeinspeisevorrichtung gegenüber dem Gleichstromkreis durch die nahe Ankopplung des Gleichstrom-Filters an den Gleichspannungs-Wandler zum Einsatz kommen, ohne störende elektrische Einflüsse an den Gleichstromkreis, das Drehstromerzeugernetz bzw. die Umgebung abzugeben.

Bei einer weiteren vorteilhaften Ausgestaltungsform der Energieeinspeisevorrichtung ist ein Spannungsregler für eine Regelung der Gleichspannung des Gleichstromkreises insbesondere im Gleichrichter vorgesehen. Dieser Spannungsregler regelt die Gleichspannung am Gleichstromkreis, wenn ein selbstgeführter, gesteuerter Gleichrichter in der Energieeinspeisevorrichtung eingesetzt wird. Eine weitere Funktionalität des Spannungsreglers ist die Spannungsbegrenzung der Gleichspannung des Gleichstromkreises, wenn ein vorgegebener Spannungsbegrenzungs-Sollwerts überschritten wird. In diesem Fall wird der Stromreglung für die Regelung der Gleichströme in den Gleichstromphasen ein Stromsollwert vorgegeben. Die Funktion der Spannungsbegrenzung im Spannungsregler wird sowohl in Kombination mit einem selbstgeführten, gesteuerten wie auch mit einem fremdgeführten, ungesteuerten Gleichrichter eingesetzt.

Bei einer weiteren vorteilhaften Ausgestaltungsform der Energieeinspeisevorrichtung ist mindestens ein weiterer Drehstromgenerator mit seinem jeweiligen Drehstromerzeugernetz über einen weiteren Gleichrichter, einen weiteren Gleichstrom-Filter und einen weiteren Gleichspannungs-Wandler für einen Parallelbetrieb der Drehstromgeneratoren am Gleichstrom-Zwischenkreis des Wechselrichters vorgesehen. Dabei werden die entsprechenden Gleichstromkreis-Sternpunkte über die Sternpunktkopplung mit dem Drehstromverteilernetz-Sternpunkt verbunden. Der Parallelbetrieb wird weiterhin effizient unterstützt, wenn die Stromregelung des Gleichspannungs-Wandlers mittels der Hysterese-Stromregler durchgeführt wird.

Bei einer weiteren vorteilhaften Ausgestaltungsform der Energieeinspeisevorrichtung ist der Spannungsregler der Gleichspannung am Gleichstromkreis und/ oder der Spannungsbegrenzung der Gleichspannung am Gleichstromkreis darüber hinaus zur Vorgabe eines Drehzahlsollwerts und ist der Stromregler der Gleichströme in den Gleichstromphasen weiterhin zur Vorgabe eines Drehmomentsollwerts für eine Turbinenregelung der Turbine, insbesondere der Windturbine vorgesehen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigt:
- FIG 1: ein erstes Schaltbild mit der Topologie einer erfindungsgemäßen Energieeinspeisevorrichtung zur effizienten und elektromagnetisch verträglichen Einspeisung einer aus kinetischer Energie mittels eines Drehstromgenerators erzeugten elektrischen Energie in ein Drehstromverteilernetz,
- FIG 2: ein weiteres Schaltbild der Energieeinspeisevorrichtung entsprechend FIG 1, wobei eine Stromregelung eines Gleichspannungs-Wandlers als ein Hysterese-Stromregler ausgeführt ist, ein Spannungsregler eine Funktion einer Spannungsbegrenzung einer Gleichspannung eines Gleichstromkreises enthält, der Stromregler und der Spannungsregler jeweils Sollwerte für einen Turbinenregler vorgeben und eine Vorladeerweiterung in einem Gleichspannungs-Zwischenkreis eines Wechselrichters enthalten ist,
- FIG 3: ein weiteres Schaltbild der Energieeinspeisevorrichtung entsprechend FIG 1, welches einen Parallelbetrieb von mindestens einem weiteren Drehstromgenerator zur Einspeisung von aus kinetischer Energie erzeugter elektrischer Energie in das Drehstromverteilernetz darstellt,
- FIG 4: ein Phasendiagramm eines Stromverlaufs und eines Spannungsverlaufs eines permanenterregten Sinusstrom-Synchronmotors und
- FIG 5: ein Phasendiagramm eines Stromverlaufs und eines Spannungsverlaufs eines permanenterregten Blockstrom-Synchronmotors.

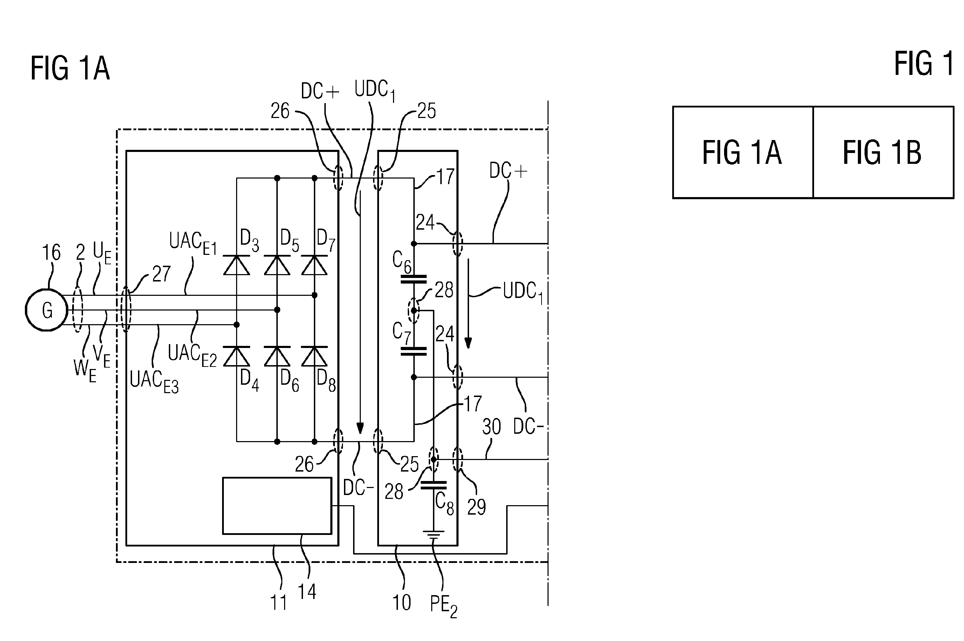

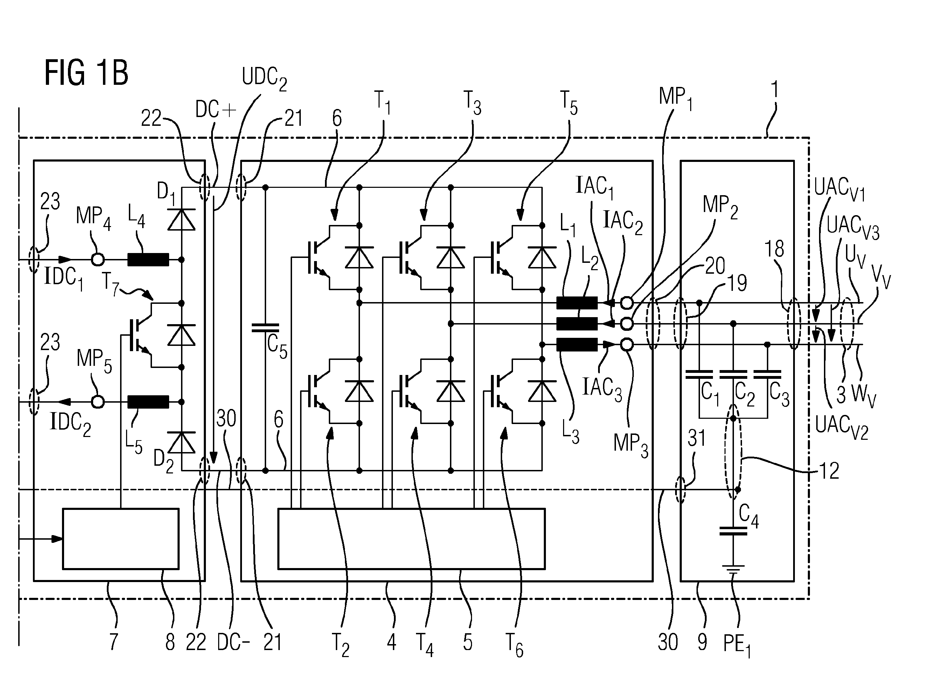

FIG 1 zeigt ein erstes Schaltbild mit der Topologie einer erfindungsgemäßen Energieeinspeisevorrichtung 1 zur effizienten und elektromagnetisch verträglichen Einspeisung einer aus kinetischer Energie mittels eines Drehstromgenerators 16 erzeugten elektrischen Energie in ein Drehstromverteilernetz 3. Der modulare Aufbau der Energieeinspeisevorrichtung 1 besteht hauptsächlich aus einem Gleichrichter 11, einem Gleichstrom-Filter 10, einem Gleichspannungs-Wandler 7, einem Wechselrichter 4 und einem Drehstrom-Filter 9. Die elektrische Anschaltung des Drehstromgenerators 16 in einem Drehstromerzeugernetz 2 an das Drehstromverteilernetz 3 beginnt mit der Verbindung dreier Erzeugernetz-Drehstromphasen U_{E},V_{E},W_{E} des Drehstromerzeugernetz 2 an einen zweiten Anschlusses 27 des Gleichrichters 11 der Energieeinspeisevorrichtung 1, wobei zwischen jeweils zwei beliebigen Erzeugernetz-Drehstromphasen U_{E},V_{E},W_{E} eine der entsprechenden Erzeugernetz-Wechselspannungen UAC_{E1},UAC_{E2},UAC_{E3} anliegt. Der Gleichrichter 11 ist mit seinem ersten Anschluss 26 über die beiden Gleichstromphasen DC+, DC- des Gleichstromkreises 17 an einen zweiten Anschluss 25 des Gleichstrom-Filters 10 der Einspeisevorrichtung 1 verbunden, wobei eine Gleichspannung UDC₁ anliegt. Ein erster Anschluss 24 des Gleichstrom-Filters 10 ist mittels der beiden Gleichstromphasen DC+, DC- mit einem zweiten Anschluss 23 des Gleichspannungs-Wandlers 7 verbunden, wobei ebenfalls die Gleichspannung UDC₁ anliegt. Ein erster Anschluss 22 des Gleichspannungs-Wandlers 7 ist mittels der beiden Gleichstromphasen DC+, DC- mit einem zweiten Anschluss 21 des Wechselrichters 4 verbunden. An dem so entstandenen Gleichspannungs-Zwischenkreis 6 liegt eine Zwischenkreis-Gleichspannung UDC₂ an. Ein erster Anschluss 20 des Wechselrichters 4 ist mittels dreier Verteilernetz-Drehstromphasen U_{V},V_{V},W_{V} mit einem zweiten Anschluss 19 des Drehstrom-Filters 9 verbunden, wobei zwischen jeweils zwei beliebigen Verteilernetz-Drehstromphasen U_{V},V_{V},W_{V} eine der entsprechenden Verteilernetz-Wechselspannungen UAC_{V1},UAC_{V2},UAC_{V3} anliegt. Ein erster Anschluss 18 des Drehstrom-Filters 9 ist mittels der drei Verteilernetz-Drehstromphasen U_{V},V_{V},W_{V} mit dem Drehstromverteilernetz 3 verbunden, wobei hier ebenfalls zwischen jeweils zwei beliebigen Verteilernetz-Drehstromphasen U_{V},V_{V},W_{V} die entsprechenden Verteilernetz-Wechselspannungen UAC_{V1}, UAC_{V2}, UAC_{V3} anliegen.

Mit Bezug zu FIG 1 wird der Aufbau und die Arbeitsweise der einzelnen Komponenten der Energieeinspeisevorrichtung 1 sowie deren gemeinsame Wirkung zur Energieeinspeisung nachfolgend erläutert. Der Gleichrichter 11 am Drehstromerzeugernetz 2 ist als fremdgeführter, ungesteuerter Gleichrichter 11 ausgeführt, was einen Einsatz von insbesondere passiven Leistungshalbleitern (D₃,D₄,D₅,D₆,D₇,D₈) ermöglicht. Ist der Gleichrichter 11 als selbstgeführter, gesteuerter Gleichrichter 11 ausgelegt, kommen aktive Leistungshalbleiter zum Einsatz, welche mittels einer Spannungsreglers 14 angesteuert werden können. In den Figuren wird diese Auslegung des Gleichrichters 11 nicht gezeigt. Die Aufgabe des Gleichrichter 11 besteht in der Wandlung der Erzeugernetz-Wechselspannungen UA-C_{E1},UAC_{E2},UAC_{E3} der Erzeugernetz-Drehstromphasen U_{E},V_{E},W_{E} des Drehstromerzeugernetzes 2 in eine Gleichspannung UDC₁ der Gleichstromphasen DC+, DC- des Gleichstromkreises 17. Der Gleichstrom-Filter 10 am Gleichstromkreis 17 besteht aus zwei zwischen den Gleichstromphasen DC+, DC- angeordneten Kapazitäten C₆, C₇, die einen Abgriff für einen Gleichstromkreis-Sternpunkt 28 bilden, welcher über eine weitere Kapazität C₈ zur Verbindung mit einem Erdpotential PE₂ vorgesehen ist. Die hauptsächliche Aufgabe des Gleichstrom-Filters 10 ist es, den Gleichstromkreis 17 sowie im Weiteren das Drehstromerzeugernetz 2 bzgl. elektromagnetischer Einflüsse der Energieeinspeisevorrichtung 1 zu isolieren und somit die elektromagnetische Verträglichkeit sicherzustellen. Auf eine Abschirmung der elektrischen Leitungen der Gleichstromphasen DC+, DCkann im Gleichstromkreis 17 und im Weiteren im Drehstromerzeugernetz 2 verzichtet werden. Der mit dem Gleichstrom-Filter 10 verbundene Gleichspannungs-Wandler 7 wandelt die Gleichspannung UDC₁ des Gleichstromkreises 17 in eine Zwischenkreis-Gleichspannung UDC₂ am Gleichspannungs-Zwischenkreis 6. Dazu wird das Potential der Gleichspannung UDC₁ auf das Potential der Zwischenkreis-Gleichspannung UDC₂ angehoben. Dies geschieht, indem ein aktiver Leistungshalbleiter T₁, welcher zwischen den Gleichstromphasen DC+, DCvorgesehen ist, mittels einer Stromregelung 8 gesteuert ein- und ausgeschaltet wird. Während eines kurzen Zeitraumes entsteht ein kontrollierter Kurzschluss zwischen den Gleichstromphasen DC+, DC-, welcher jeweils einen Gleichstrom IDC₁, IDC₂ durch zwei Induktivitäten L₄, L₅ in den entsprechenden Gleichstromphasen DC+, DC- treibt. Die Abschaltung des aktiven Leistungshalbleiters T₁ erhöht das Potential der Zwischenkreis-Gleichspannung UDC₂ gegenüber der Gleichspannung UDC₁. Am Wechselrichter 4 liegt nun eine Zwischenkreis-Gleichspannung UDC₂ an, mittels der eine Zwischenkreis-Kapazität C₅ für die Energieabgabe an das Drehstromverteilernetz 3 vorgeladen wird. Eine Wechselrichter-Regelung 5 erzeugt aus der Zwischenkreis-Gleichspannung UDC₂ durch getaktetes Schalten von aktiven Leistungshalbleitern T₁, T₂, T₃, T₄, T₅, T₆ die entsprechenden Verteilernetz-Wechselspannungen UAC_{V1},UAC_{V2},UAC_{V3} an den netzseitig am Wechselrichter 4 anliegenden Verteilernetz-Drehstromphasen U_{V},V_{V},W_{V} sowie die darin fließenden Wechselströme IAC₁, IAC₂, IAC₃. In den Verteilernetz-Drehstromphasen U_{V},V_{V},W_{V} ist jeweils eine Induktivität L₁, L₂, L₃ vorgesehen, die das Potential der Zwischenkreis-Gleichspannung UDC₂ auf das Potential der jeweiligen Verteilernetz-Wechselspannungen UAC_{V1},UAC_{V2},UAC_{V3} im Drehstromverteilernetz 3 herabsetzt. Um die Energieeinspeisevorrichtung 1 bzgl. der elektromagnetischen Verträglichkeit gegenüber dem Drehstromverteilernetz 3 zu isolieren, wird der Drehstrom-Filter 9 in die Verteilernetz-Drehstromphasen U_{V},V_{V},W_{V} zwischen Wechselrichter 4 und Drehstromverteilernetz 3 eingebunden. Im Drehstrom-Filter 9 ist ausgehend von dessen Verteilernetz-Drehstromphasen U_{V},V_{V},W_{V} jeweils eine Kapazität C₁, C₂, C₃ mit einem Drehstromverteilernetz-Sternpunkt 12 verbunden, welcher mittels einer weiteren Kapazität C₄ an ein Erdpotential PE₁ angeschlossen ist. Auf eine Abschirmung der elektrischen Leitungen der Verteilernetz-Drehstromphasen U_{V},V_{V},W_{V} kann im Drehstromverteilernetz 3 verzichtet werden. Die symmetrische Anbindung der Gleichspannung UDC₁ im Gleichstromkreis 17 an den Drehstromverteilernetz-Sternpunkt 12 des Drehstromverteilernetzes 3 wird durch eine Sternpunktkopplung 30 des Gleichstromkreis-Sternpunkts 28 im Gleichstrom-Filter 10 mit dem Drehstromverteilernetz-Sternpunkt 12 im Drehstrom-Filter 9 erreicht. Die für die Wechselrichter-Regelung 5 des Wechselrichters 4 notwendigen Messwerte der Wechselströme IAC₁, IAC₂, IAC₃ in den Verteilernetz-Drehstromphasen U_{V},V_{V},W_{V} werden an den entsprechenden Strommesspunkten MP₁, MP₂, MP₃ nahe am Drehstrom-Filter 9 abgegriffen. Die für die Stromregelung 8 des Gleichspannungs-Wandler 7 notwendigen Messwerte der Gleichströme IDC₁, IDC₂ in den Gleichstromphasen DC+, DCdes Gleichstromkreises 17 werden an den entsprechenden Strommesspunkten MP₄, MP₅ nahe am Gleichstrom-Filter 10 abgegriffen. Auf eine Abschirmung der elektrischen Leitungen für den Abgriff der Messwerte der Wechselströme IAC₁, IAC₂, IAC₃ und der Gleichströme IDC₁, IDC₂ kann aufgrund der elektromagnetisch isolierenden Wirkung des Drehstrom-Filters 9 und des Gleichstrom-Filters 10 gegenüber insbesondere den aktiven Leistungshalbleitern T₁, T₂, T₃, T₄, T₅, T₆, T₇ verzichtet werden.

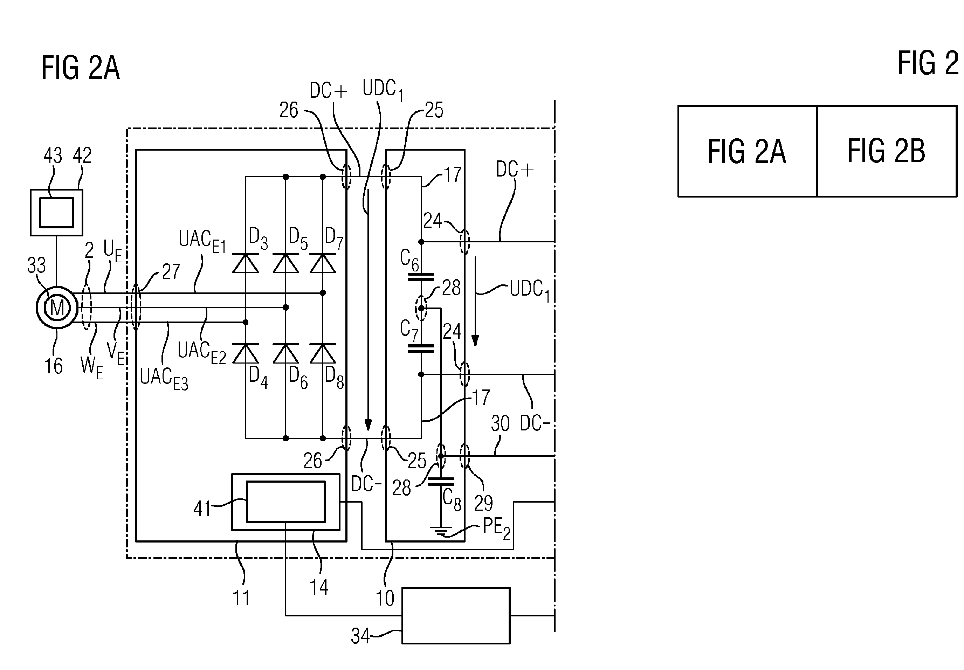

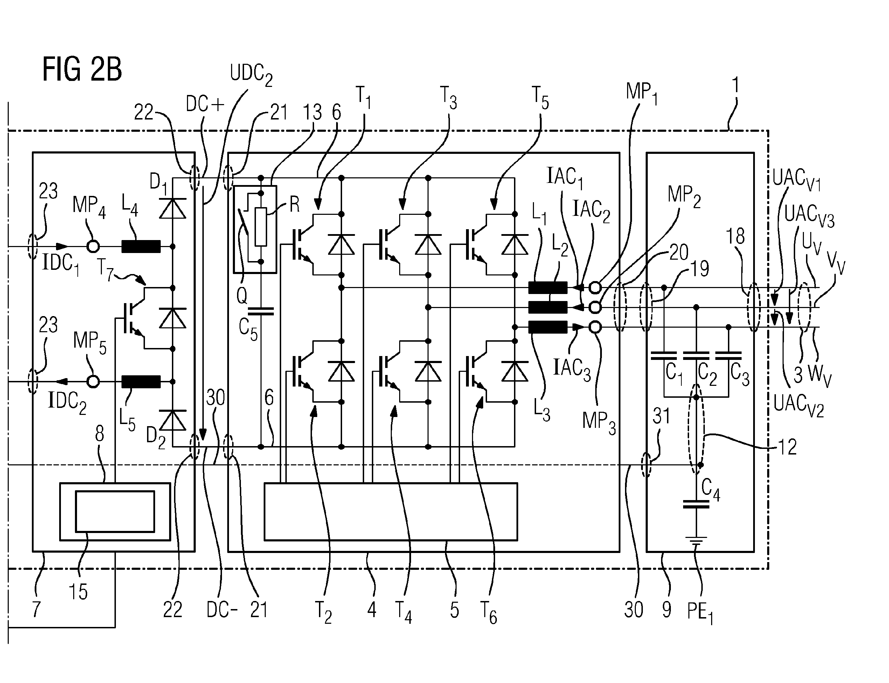

FIG 2 zeit ein weiteres Schaltbild der Energieeinspeisevorrichtung 1 entsprechend FIG 1, wobei der angeschlossene Drehstromgenerator 16 als permanenterregter Blockstrom-Synchronmotor 33 ausgelegt ist, welcher generatorisch von einer als eine Windturbine 43 ausgelegten Turbine 42 angetrieben wird. Die Stromregelung 8 des Gleichspannungs-Wandlers 7 ist als ein Hysterese-Stromregler 15 ausgeführt. Die Funktion einer Spannungsbegrenzung 41 der Gleichspannung UDC₁ im Gleichstromkreis 17 ist in dem Spannungsregler 14 vorgesehen. Überschreitet die Gleichspannung UDC₁ einen vorgegebenen Sollwert, wird dem Stromregler 8 des Gleichspannungs-Wandlers 7 ein proportional zur Abweichung ansteigender Stromsollwert vorgegeben. Der Wechselrichter 4 enthält in FIG 2 eine Vorladeerweiterung 13 in seinem Gleichspannungs-Zwischenkreis 6, welche aus einer Parallelschaltung von einem Vorladewiderstand R und einem Überbrückungsrelais-Schaltkontakt Q besteht und in Reihe mit der Kapazität C₅ zwischen den beiden Gleichstromphasen DC+,DC- des Gleichspannungs-Zwischenkreises 6 liegt. Ziel der Vorladeerweiterung 13 ist der Schutz der Kapazität C₅ vor unzulässig hohen Strömen bei deren Vorladung des Gleichspannungs-Zwischenkreis 6. Der Ladestrom der Kapazität C₅ wird zuerst mittels des Vorladewiderstandes R begrenzt. Mit erreichen eines für die Kapazität C₅ unkritischen Stromflusses wird der Vorladewiderstand R von dem Überbrückungsrelais-Schaltkontaktes Q überbrückt. Die Steuerung des Überbrückungsrelais-Schaltkontaktes Q wird insbesondere von der Wechselrichter-Regelung 5 des Wechselrichters 4 durchgeführt werden.

Entsprechend dem Ausführungsbeispiel in FIG 2 ist die Einspeisung von elektrischer Energie mit der Energieeinspeisevorrichtung 1 speziell auf die Energiegewinnung mittels eines von einer Turbine 42, insbesondere einer Windturbine 43 angetriebenen Drehstromgenerators 16, insbesondere eines generatorisch angetriebenen permanenterregten Blockstrom-Synchronmotors 33 abgestimmt. Damit für den Drehstromgenerator 16, insbesondere für den generatorisch angetriebenen permanenterregten Blockstrom-Synchronmotors 33, in Kombination mit der Energieeinspeisevorrichtung 1 ein optimaler Betriebspunkt erreicht und damit eine maximale Leistungsausbeute erzielt werden kann, muss die Turbine 42, insbesondere die Windturbine 43 und/ oder der Drehstromgenerator 16 in Drehzahl und Drehmoment geregelt werden. Für die Turbinenreglung 34 der Turbine 42 gibt der Spannungsregler 14 zur Regelung und zur Spannungsbegrenzung 41 der Gleichspannung UDC₁ am Gleichstromkreis 17 einen Drehzahlsollwert und der Stromregler 8 des Gleichspannungs-Wandlers 7 dementsprechend einen Drehmomentsollwert vor.

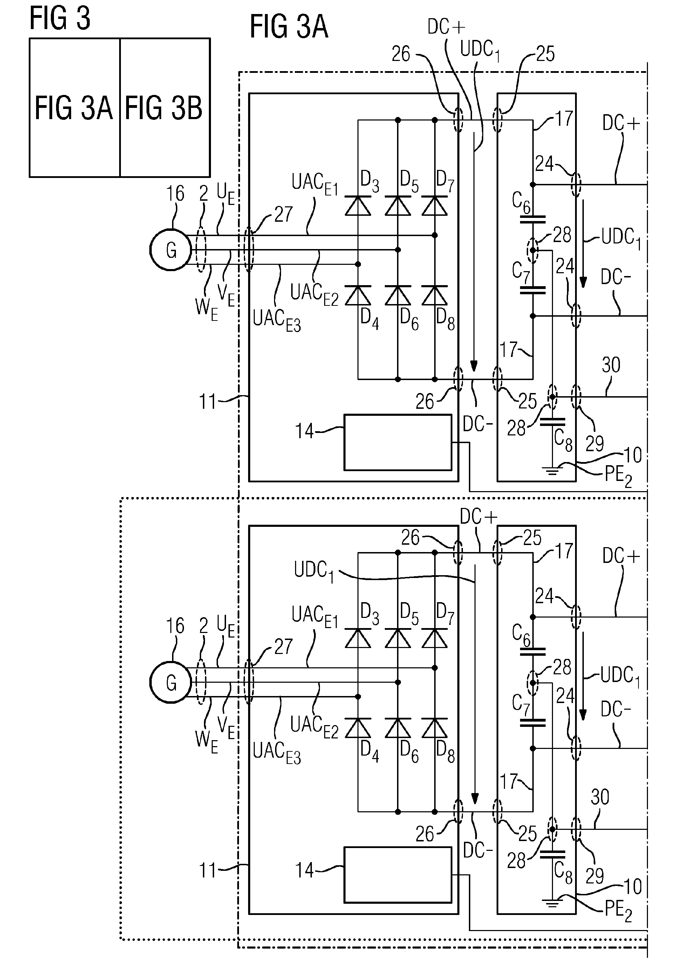

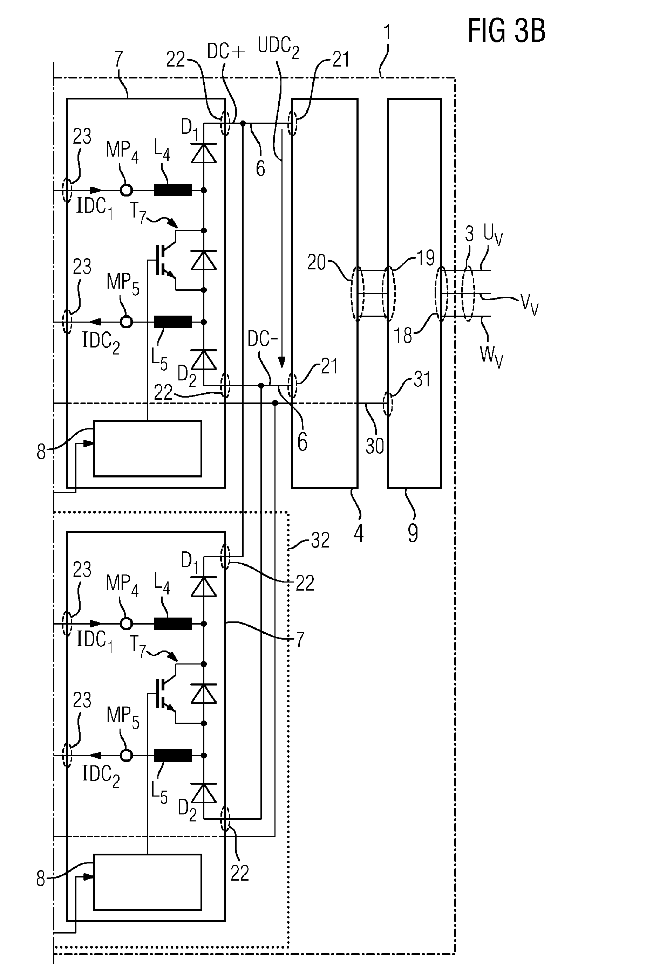

FIG 3 zeigt ein weiteres Schaltbild der Energieeinspeisevorrichtung 1 entsprechend FIG 1, welches einen Parallelbetrieb 32 von mindestens einem weiteren Drehstromgenerator 16 zur effizienten und elektromagnetisch verträglichen Einspeisung der aus kinetischer Energie mittels Drehstromgeneratoren 16 erzeugten elektrischen Energie in ein Drehstromverteilernetz 3 darstellt. Der Gleichspannungs-Wandler 7, der Wechselrichter 4 und der Drehstrom-Filter 9 werden in FIG 3 nur schematisch gezeigt, entsprechen aber in Aufbau und Funktionalität denen der erfindungsgemäßen Energieeinspeisevorrichtung 1. Die Kopplung der weiteren Drehstromgeneratoren 16 zum Parallelbetrieb 32 der Einspeisung von elektrischer Energie in das Drehstromverteilernetz 3 erfolgt mittels des gemeinsamen Gleichspannungs-Zwischenkreises 6 der Energieeinspeisevorrichtung 1. Die Kopplung der weiteren Drehstromgeneratoren 16 bezüglich deren symmetrischer Anbindung an den Drehstromverteilernetz-Sternpunkt 12 des Drehstromverteilernetzes 3 erfolgt mittels der gemeinsamen Sternkopplung 30 der Energieeinspeisevorrichtung 1.

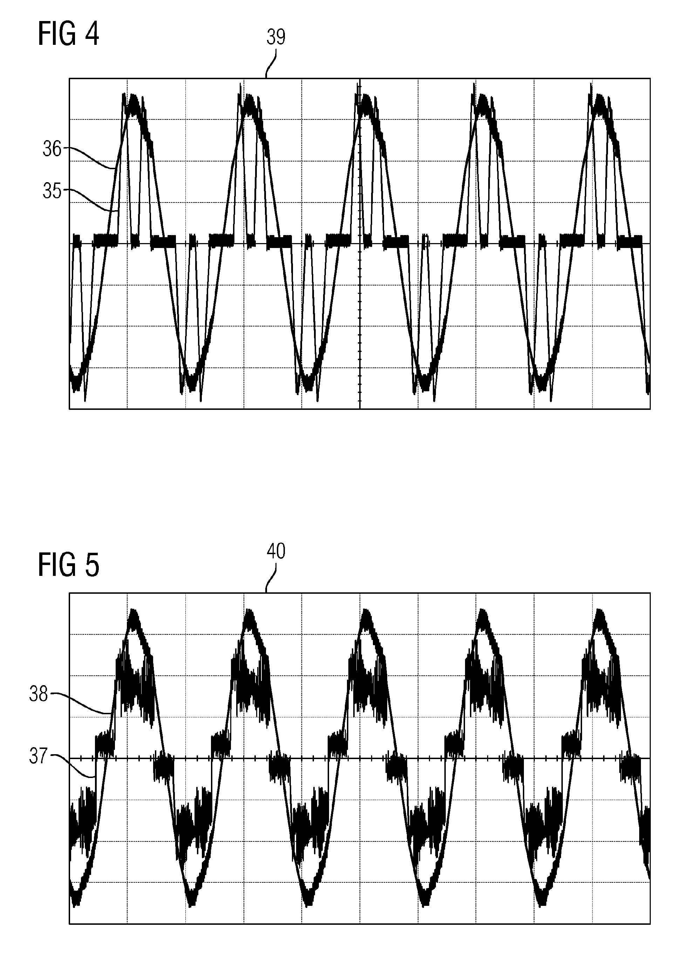

FIG 4 zeigt in einem Phasendiagramm 39 einen Spannungsverlauf 36 und einen Stromverlauf 35 eines permanenterregten Sinusstrom-Synchronmotors. An dieser Stelle ist zu sehen, dass der Stromverlauf 35 pro Spannungshalbwelle des Spannungsverlaufs 36 mehrmals oszilliert und Stromspitzen aufzeigt, welche u.a. die Kapazitäten aber auch weitere elektrische Komponenten der Energieeinspeisevorrichtung 1 elektrisch belasten.

Im Gegensatz dazu zeigt FIG 5 in einem Phasendiagramm 40 einen Spannungsverlauf 38 und einen Stromverlauf 37 eines permanenterregten Blockstrom-Synchronmotors 33. Beim generatorischen Einsatz des permanenterregten Blockstrom-Synchronmotors 33 erzeugt er pro Spannungshalbwelle des Spannungsverlaufs 38 einen Stromverlauf 37 in Form eines Blockes. Damit werden Stromspitzen, wie sie beim permanenterregten Sinusstrom-Synchronmotor vorkommen, wesentlich reduziert. Die elektrischen Komponenten der Energieeinspeisevorrichtung 1 können somit bei gleicher Funktionalität wirtschaftlicher ausgelegt werden.

## Patentansprüche

1. Energieeinspeisevorrichtung (1) zur effizienten und elektromagnetisch verträglichen Einspeisung einer aus kinetischer Energie mittels eines Drehstromgenerators (16) erzeugten elektrischen Energie in ein Drehstromverteilernetz (3), aufweisend:
- einen Drehstrom-Filter (9) im Drehstromverteilernetz (3), der ausgehend von dessen Verteilernetz-Drehstromphasen (U_{V},V_{V},W_{V}) über jeweils eine Kapazität (C₁, C₂, C₃) einen Drehstromverteilernetz-Sternpunkt (12) bildet, welcher mit einer weiteren Kapazität (C₄) zur Anbindung an ein Erdpotential (PE₁) vorgesehen ist,
- einen Wechselrichter (4), der zur Umrichtung einer mittels einer Kapazität (C₅) vorgeladenen Zwischenkreis-Gleichspannung (UDC₂) eines Gleichspannungs-Zwischenkreises (6) in entsprechende Verteilernetz-Wechselspannungen (UAC_{V1},UAC_{V2},UAC_{V3}) des Drehstromverteilernetzes (3) vorgesehen ist,
- einen Gleichspannungs-Wandler (7), der zur Wandlung einer Gleichspannung (UDC₁) an einem Gleichstromkreis (17) in die Zwischenkreis-Gleichspannung (UDC₂) des Gleichspannungs-Zwischenkreises (6) vorgesehen ist,
- einen Gleichstrom-Filter (10) im Gleichstromkreis (17), der mittels zweier zwischen den Gleichstromphasen (DC+,DC-) angeordneter Kapazitäten (C₆,C₇) einen Abgriff für einen Gleichstromkreis-Sternpunkt (28) bildet, welcher über eine weitere Kapazität (C₈) zur Verbindung mit einem Erdpotential (PE₂) vorgesehen ist,
- einen Gleichrichter (11), der zur Umrichtung einer Erzeugernetz-Wechselspannung (UAC_{E1},UAC_{E2,}UAC_{E3}) eines Drehstromerzeugernetzes (2) in die Gleichspannung (UDC₁) des Gleichstromkreises (17) vorgesehen ist und
- eine Sternpunktkopplung (30) zwischen dem Gleichstromkreis-Sternpunkt (28) und dem Drehstromverteilernetz-Sternpunkt (12), die zur symmetrischen Anbindung des Gleichstromkreises (17) an den Drehstromverteilernetz-Sternpunkt (12) des Drehstromverteilernetzes (3) vorgesehen ist.

2. Energieeinspeisevorrichtung (1) nach Anspruch 1, wobei eine Verbindung der Verteilernetz-Drehstromphasen (U_{V},V_{V},W_{V}) des Drehstromverteilernetzes (3) mit einem ersten Anschluss (18) der Verteilernetz-Drehstromphasen (U_{V},V_{V},W_{V}) des Drehstrom-Filters (9) vorgesehen ist, eine Verbindung der Verteilernetz-Drehstromphasen (U_{V},V_{V},W_{V}) eines zweiten Anschlusses (19) des Drehstrom-Filters (9) mit einem ersten Anschluss (20) der Verteilernetz-Drehstromphasen (U_{V},V_{V},W_{V}) des Wechselrichters (4) vorgesehen ist, eine Verbindung der Gleichstromphasen (DC+,DC-) eines zweiten Anschlusses (21) des Wechselrichters (4) mit einem ersten Anschluss (22) der Gleichstromphasen (DC+,DC-) des Gleichspannungs-Wandlers (7) vorgesehen ist, eine Verbindung der Gleichstromphasen (DC+,DC-) eines zweiten Anschlusses (23) des Gleichspannungs-Wandlers (7) mit einem ersten Anschluss (24) der Gleichstromphasen (DC+,DC-) des Gleichstrom-Filters (10) vorgesehen ist, eine Verbindung eines zweiten Anschlusses (25) der Gleichstromphasen (DC+,DC-) des Gleichstrom-Filters (10) mit einem ersten Anschluss (26) der Gleichstromphasen (DC+,DC-) des Gleichrichters (11) vorgesehen ist, eine Verbindung der Erzeugernetz-Drehstromphasen (U_{E},V_{E},W_{E}) eines zweiten Anschlusses (27) des Gleichrichters (11) mit den Erzeugernetz-Drehstromphasen (U_{E},V_{E},W_{E}) des Drehstromerzeugernetzes (2) vorgesehen ist und die Sternpunktkopplung (30) zwischen dem Gleichstromkreis-Sternpunkt (28) und dem Drehstromverteilernetz-Sternpunkt (12) jeweils über einen dritten Anschluss (29,31) des Gleichstrom-Filters (10) und des Drehstrom-Filters (9) vorgesehen ist.

3. Energieeinspeisevorrichtung (1) nach den Ansprüchen 1 oder 2, wobei die Energieeinspeisevorrichtung (1) zur Anbindung an einen als Drehstromgenerator (16) eingesetzten permanenterregten Blockstrom-Synchronmotors (33) vorgesehen ist, welcher von einer Turbine (42), insbesondere von einer Windturbine (43) erzeugte kinetische Energie in elektrische Energie wandelt.

4. Energieeinspeisevorrichtung (1) nach einem der Ansprüche 1 bis 3, wobei im Wechselrichter (4) am Gleichspannungs-Zwischenkreises (6) eine Vorladeerweiterung (13) vorgesehen ist, die eine Parallelschaltung aus einem Vorladewiderstand (R) und einem, insbesondere von der Wechselrichter-Regelung (5) des Wechselrichters (4) ansteuerbaren Überbrückungsrelais-Schaltkontakt (Q) aufweist und in Reihe mit der Kapazität (C₅) zwischen den beiden Gleichstromphasen (DC+,DC-) des Gleichspannungs-Zwischenkreises (6) im Wechselrichter (4) liegt.

5. Energieeinspeisevorrichtung (1) nach einem der Ansprüche 1 bis 4, wobei in den Verteilernetz-Drehstromphasen (U_{V},V_{V},W_{V}) des Wechselrichters (4) jeweils ein Strommesspunkt (MP₁,MP₂,MP₃) zur Messung der entsprechenden Wechselströme (IAC₁,IAC₂,IAC₃) sowie jeweils eine Induktivität (L₁,L₂,L₃) vorgesehen sind.

6. Energieeinspeisevorrichtung (1) nach einem der Ansprüche 1 bis 5, wobei insbesondere im Wechselrichter (4) eine Wechselrichter-Regelung (5) für die Regelung der Zwischenkreis-Gleichspannung (UDC₂) und der entsprechenden Wechselströme (IAC₁,IAC₂,IAC₃) in den Verteilernetz-Drehstromphasen (U_{V},V_{V},W_{V}) des Wechselrichters (4) vorgesehen ist.

7. Energieeinspeisevorrichtung (1) nach einem der Ansprüche 1 bis 6, wobei der Wechselrichter (4) von der Wechselrichter-Regelung (5) angesteuerte aktive Leistungshalbleiter (T₁,T₂,T₃,T₄,T₅,T₆) aufweist, für die insbesondere hochfrequent schaltbare Leistungshalbleiter, wie SiC-JFETs und/oder SiC-MOSFETs, vorgesehen sind.

8. Energieeinspeisevorrichtung (1) nach einem der Ansprüche 1 bis 7, wobei in den Gleichstromphasen (DC+,DC-) des Gleichspannungs-Wandlers (7) jeweils ein Strommesspunkt (MP₄,MP₅) zur Messung der entsprechenden Gleichströme (IDC₁,IDC₂) , jeweils eine Induktivität (L₄,L₅) sowie jeweils ein, insbesondere passiver, Leistungshalbleiter (D₁,D₂) vorgesehen sind.

9. Energieeinspeisevorrichtung (1) nach einem der Ansprüche 1 bis 8, wobei insbesondere im Gleichspannungs-Wandler (7) eine Stromregelung (8) für die Regelung der Gleichströme (IDC₁,IDC₂) in den Gleichstromphasen (DC+,DC-) des Gleichspannungs-Wandler (7) vorgesehen ist.

10. Energieeinspeisevorrichtung (1) nach einem der Ansprüche 1 bis 9, wobei für die Stromregelung (8) des Gleichspannungs-Wandlers (7) ein Hysterese-Stromregler (15) vorgesehen ist.

11. Energieeinspeisevorrichtung (1) nach einem der Ansprüche 1 bis 10, wobei der Gleichspannungs-Wandler (7) zwischen den Gleichstromphasen (DC+,DC-) mindestens einen, von der Stromregelung (8) angesteuerten aktiven Leistungshalbleiter (T₇) aufweist, für den insbesondere hochfrequent schaltbare Leistungshalbleiter, SiC-JFETs oder SiC-MOSFETs, vorgesehen sind.

12. Energieeinspeisevorrichtung (1) nach einem der Ansprüche 1 bis 11, wobei der Gleichrichter (11) als fremdgeführter, ungesteuerter Gleichrichter (11) vorgesehen ist und insbesondere passive Leistungshalbleiter (D₃,D₄,D₅,D₆,D₇,D₈) aufweist.

13. Energieeinspeisevorrichtung (1) nach einem der Ansprüche 1 bis 12, wobei für eine Regelung der Gleichspannung (UDC₁) des Gleichstromkreises (17) insbesondere im Gleichrichter (11) ein Spannungsregler (14) vorgesehen ist.

14. Energieeinspeisevorrichtung (1) nach einem der Ansprüche 1 bis 13, wobei für den Spannungsregler (14) eine Spannungsbegrenzung (41) der Gleichspannung (UDC₁) des Gleichstromkreises (17) vorgesehen ist, welche bei Überschreitung eines vorgegebenen Spannungsbegrenzungs-Sollwerts für die Stromreglung (8) der Gleichströme (IDC₁,IDC₂) in den Gleichstromphasen (DC+,DC-) einen Stromsollwert vorgibt.

15. Energieeinspeisevorrichtung (1) nach einem der Ansprüche 1 bis 14, wobei mindestens ein weiterer Drehstromgenerator (16) am Drehstromerzeugernetz(2) über einen weiteren Gleichrichter (11), einen weiteren Gleichstrom-Filter (10) und einen weiteren Gleichspannungs-Wandler (7) für einen Parallelbetrieb (32) der Drehstromgeneratoren (16) am Gleichstrom-Zwischenkreis (6) des Wechselrichters (4) mittels einer Verbindung mit dessen zweiten Anschluss (21) vorgesehen sind.

16. Energieeinspeisevorrichtung (1) nach einem der Ansprüche 1 bis 15, wobei für den Parallelbetrieb (32) der Drehstromgeneratoren (16) am Gleichstrom-Zwischenkreis (6) des Wechselrichters (4) mittels der Sternpunktkopplung (30) die Gleichstromkreis-Sternpunkte (28) der weiteren Gleichstrom-Filter (10) zur Verbindung mit dem Drehstromverteilernetz-Sternpunkt (12) vorgesehen sind.

17. Energieeinspeisevorrichtung (1) nach den Ansprüchen 1 bis 16, wobei der Spannungsregler (14) der Gleichspannung (UDC₁) am Gleichstromkreis (17) und/ oder der Spannungsbegrenzung (41) der Gleichspannung (UDC₁) am Gleichstromkreis (17) ebenfalls zur Vorgabe eines Drehzahlsollwerts und der Stromregler (8) der Gleichströme (IDC₁,IDC₂) in den Gleichstromphasen (DC+,DC-) ebenfalls zur Vorgabe eines Drehmomentsollwerts für eine Turbinenregelung (34) der Turbine (42), insbesondere der Windturbine (43) vorgesehen sind.
